# FASCICULE DE BREVET EUROPEEN

(11) **EP 2 975 947 B1**
(45) Date de publication et mention de la délivrance du brevet: **02.01.2019**
(21) Numéro de dépôt: 14716902.3
(22) Date de dépôt: 20.03.2014
(51) Int. Cl.: A23D 9/007, C11B 5/00

(54) **COMPOSITION ALIMENTAIRE LIQUIDE STABLE AU STOCKAGE ET A LA CUISSON**
LAGERSTABILE UND GLÜHBESTÄNDIGE FLÜSSIGE LEBENSMITTELZUSAMMENSETZUNG
STORAGE-STABLE AND BAKE-STABLE LIQUID FOOD COMPOSITION

(30) Priorité: 20.03.2013 FR 1352505
(43) Date de publication de la demande: 27.01.2016
(73) Titulaire: Lesieur S.A.S., 92665 Asnières-sur-Seine cedex (FR)
(72) Inventeur: LONFIER, Laure, F-59640 Dunkerque (FR); COLAT, Michelle-Karine, F-59240 Dunkerque (FR)
(74) Mandataire: Grosset-Fournier, Chantal Catherine
(86) Numéro de dépôt international: PCT/FR2014/050655
(87) Numéro de publication internationale: WO 2014/147352

(56) Documents cités:
- EP-A2- 0 351 122
- WO-A1-2011/055072
- GB-A- 2 276 629
- RU-C2- 2 224 441
- US-A- 5 709 888

## Description

La présente invention a pour objet une composition alimentaire liquide présentant des propriétés organoleptiques stables au stockage et à la cuisson, et dont les propriétés organoleptiques sont également stables.

La cuisson permet de modifier le goût, la texture ou les qualités nutritives d'un aliment ou d'une préparation (coagulation des protéines de l'oeuf ou réaction de Maillard pour la viande par exemple).

Parmi les différents modes de cuisson, on trouve notamment la friture plate qui nécessite l'utilisation de matière grasse, comme par exemple du beurre, de l'huile, des mélanges de beurre et d'huile, de la margarine, du saindoux ou de la graisse de canard.

Le beurre est une émulsion d'eau dans de la matière grasse laitière d'origine laitière et a un taux de matière grasse de 82%. Il confère un goût particulier aux aliments, un goût de beurre. La température critique (ou point de fumage ou point de fumée) du beurre est de 130°C. Au-delà de 130°C, il se forme des composés toxiques, le beurre fume et noircit. Le beurre n'est donc, à moins de la clarifier, la matière grasse la plus adaptée pour la cuisson.

Les huiles alimentaires sont constituées de 95% à 99% de triglycérides, le reste étant composé de constituants mineurs : 1 à 5% tels que des phospholipides, des insaponifiables, (cire, stérols, vitamines E (tocophérols), carotènes, ...). Elles ne contiennent pas d'eau. Leur teneur élevée en acides gras mono-insaturés ou poly-insaturés est bénéfique pour la santé.

Parmi les acides gras mono-insaturés présents dans les huiles, on peut citer l'acide oléique, principal composant de l'huile d'olive. L'acide oléique, moins sensible à l'oxydation, offre une meilleure tenue aux températures élevées de friture et une meilleure résistance au rancissement. D'autres huiles, dites huiles oléiques sont issues de graines qui présentent une forte teneur en acide oléique. Ainsi l'huile de tournesol oléique se distingue de l'huile de tournesol classique par des proportions différentes des acides gras constitutifs de l'huile : la teneur en acide oléique (mono-insaturé) est accrue tandis que la teneur en acide linoléique (poly-insaturé) est réduite. Aujourd'hui, une variété de tournesol est considérée comme « oléique » quand sa teneur en acide oléique dépasse 75% (valeur Codex).

Pour chaque huile, il existe une température critique au dessus de laquelle il ne faut pas la chauffer, celle-ci variant en fonction de la composition en acide gras. En effet, quand l'huile atteint sa température critique, ses composés se dégradent, forment des composés toxiques tels que l'acroléine, l'huile fume et noircit. C'est pour cela que certaines huiles dont la température est faible sont déconseillées pour la cuisson.

Les huiles les plus adaptées pour la cuisson sont les huiles d'arachide ou d'olive dont le point de fumée est élevé, respectivement de 240°C et 227°C, mais les huiles de tournesol et de soja, avec un point de fumée de 232°C, sont également souvent utilisées.

Des matières grasses avec un point de fumée élevé, qui ne noircissent pas à la cuisson, n'éclaboussent pas et présentent un goût de beurre sont connues (WO/2011/055072).

De telles matières grasses présentent néanmoins des problèmes de stabilité.

Il existe donc un intérêt de disposer d'une matière grasse qui soit stable.

L'un des buts de l'invention est ainsi de fournir une matière grasse, sous forme de composition alimentaire liquide physiquement stable au stockage et à la cuisson.

Un autre but de l'invention est de fournir une composition alimentaire liquide dont les propriétés organoleptiques sont stables.

Un autre but de l'invention est aussi de fournir une composition alimentaire liquide qui ne noircit pas à la cuisson (avec ou sans aliment) jusqu'à 200°C et qui présente un goût du beurre.

Un autre but de l'invention est également de fournir une composition alimentaire liquide qui est dépourvue d'émulsifiant.

Aussi l'invention a-t-elle pour objet une composition alimentaire liquide apte à être utilisée pour la cuisson des aliments, ladite composition contenant :
- 80% - 90% en poids de la composition d'un mélange d'huiles végétales comprenant 20% - 40% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion compris de 5°C à 20°C,
- moins de 1% en poids de la composition d'antioxydant, lequel est dépourvu de propriétés émulsifiantes,
- optionnellement, au moins un additif, notamment un arôme beurre à raison de moins de 1% en poids de la composition,
ladite composition étant dépourvue d'eau, de sucres, de protéines et d'émulsifiant, et ladite composition ne noircissant pas à la cuisson, ayant des propriétés de stabilité physique de stockage à 40°C pendant au moins 30 jours, ayant des propriétés organoleptiques stables à la cuisson jusqu'à environ 200°C et ayant une stabilité de stockage de 4°C à 25°C pendant au moins 10 mois.

On entend au sens de la présente invention par « huile végétale oléique », une huile végétale, par exemple une huile de tournesol, de colza ou d'arachide, dont la teneur en acide oléique (mono-insaturé) est accrue tandis que la teneur en acide linoléique (poly-insaturé) est réduite. Une variété de tournesol est considérée comme « oléique » quand sa teneur en acide oléique dépasse 75%. On peut citer à titre d'exemple la variété commercialisée sous la marque Oléisol®. Les huiles d'arachide et de colza (bas et haut linoléique) ayant un profil en acides gras similaire (notamment en oméga-9 ou oléique) peuvent également être utilisés. Lorsque l'huile de colza est utilisée, sa teneur représente au maximum 13% en poids de la composition.

On entend au sens de la présente invention par « matière grasse laitière anhydre » (MGLA) du beurre concentré ou communément appelé beurre clarifié par les professionnels de la restauration. La MGLA est produite à partir de crème laitière ou de beurre de toute première qualité au moyen de procédés physiques de séparation (cristallisation fractionnée) au cours duquel toute l'eau et les matières sèches non grasses sont extraites. Elle peut être utilisée sous forme liquide, de bloc ou de poudre à fondre avant utilisation. Elle présente une plasticité importante et un aspect fondant sur une large plage de température.

On entend au sens de la présente invention par « sucre », un sucre réducteur est un sucre possédant un groupe aldéhyde ou capable d'en former par isomérie. De tels sucres sont par exemple le glucose, le fructose, le lactose ou encore le galactose.

On entend au sens de la présente invention par « protéine », un polymère d'acides aminés.

La composition selon la présente invention étant dépourvue de sucres réducteurs et de protéines, aucune réaction de Maillard ne peut donc se produire.

On entend au sens de la présente invention par « émulsifiant », toute substance qui stabilise l'émulsion, c'est-à-dire le mélange de deux substances liquides (miscibles ou non miscibles).

L'intérêt de supprimer tout émulsifiant d'une composition selon la présente invention permet d'obtenir une composition physiquement stable au stockage, jusqu'à 40°C, ainsi qu'à la cuisson et à haute température, notamment jusqu'à 200°C.

Les inventeurs ont en effet mis en évidence de façon inattendue, que l'absence d'émulsifiant dans la composition selon l'invention, permet d'obtenir une composition stable au stockage, quelle que soit la température. Il s'agit d'un résultat surprenant étant donné que l'émulsifiant est connu pour épaissir et maintenir en suspension la micro-cristallisation de la MGLA dans l'huile, et non pour favoriser la déstabilisation de la micro-cristallisation de la MGLA lorsque la température augmente.

Les inventeurs ont également mis en évidence de façon surprenante que l'absence d'émulsifiant dans la composition selon l'invention permet d'obtenir une composition homogène, transparente, limpide, ne présentant ni de dépôt, ni de déphasage.

Par « homogène », on entend au sens de la présente invention que la composition ne comprend qu'une seule phase. Cela signifie aussi que la composition selon l'invention n'est pas trouble.

Par « transparente », on entend au sens de la présente invention que la composition laisse passer la lumière. Ladite composition selon la présente invention peut également être translucide.

Par « limpide », on entend au sens de la présente invention que la composition est claire, elle n'est pas trouble.

Par « dépôt », on entend que des composants de la composition selon la présente invention se sont déposés au fond d'un récipient contenant ou ayant contenu ladite composition.

Par « déphasage », on entend que la composition selon la présente invention ne comprend pas au moins deux phases, mais uniquement une phase.

Dans un aspect, ladite composition alimentaire liquide apte à être utilisée pour la cuisson des aliments selon l'invention est ainsi homogène.

Dans un aspect, ladite composition alimentaire liquide apte à être utilisée pour la cuisson des aliments selon l'invention est ainsi translucide.

Dans un aspect, ladite composition alimentaire liquide apte à être utilisée pour la cuisson des aliments selon l'invention est ainsi limpide.

Dans un aspect, ladite composition alimentaire liquide apte à être utilisée pour la cuisson des aliments selon l'invention ne présente pas de dépôt, notamment au fond d'un récipient contenant ou ayant contenu ladite composition.

Dans un aspect, ladite composition alimentaire liquide apte à être utilisée pour la cuisson des aliments selon l'invention ne présente pas de déphasage.

Les compositions selon la présente invention peuvent également contenir les additifs usuels dans le domaine, notamment les arômes, les antioxydants, les anti-mousses, les épaississants et les colorants. Aucun des additifs utilisés dans la présente invention n'a de propriétés émulsifiantes. Ainsi, le β-carotène peut par exemple être utilisé comme colorant dans la présente invention.

L'antioxydant présent dans la composition selon la présente invention peut être choisi parmi le groupe constitué par le Tocoblend (L50IP ou L70IP), un mélange de tocophérols, un polyphénol ou un extrait de romarin.

Le Tocoblend® (commercialisé par Vitablend) est un antioxydant naturel contenant les tocophérols suivants (sur une base de 100%) :
- D-α-Tocopherol : 9-20%
- D-β-Tocopherol : 1-4%
- D-γ-Tocopherol : 50-65%
- D-δ-Tocopherol : 20-35%

Par « propriétés de stabilité physique de stockage », on entend, au sens de la présente invention que la composition ne présente pas de déphasage, ni à une température ambiante, ni jusqu'à une température d'au moins 40°C. La composition est donc stable au stockage, et notamment à environ 4°C (conditions d'un réfrigérateur chez un consommateur par exemple) jusqu'à environ 40°C (conditions possible de stockage dans un camion sur plusieurs jours en plein été). L'expression « une température d'au moins 40°C », doit s'entendre comme pouvant signifier une température d'au moins 50°C, par exemple 55°C. cela signifie aussi des températures d'au moins 41°C, 42°C, 43°C, 44°C, 45°C, 46°C, 47°C, 48°C, 49°C, 50°C, 51°C, 52°C, 53°C, 54°C, et 55°C.

Pour déterminer la stabilité au stockage d'une composition selon la présente invention, un test tel que décrit ci-dessous peut notamment être effectué :
Appareil utilisé : un mélangeur de type Ystral avec un rotor stator standard.

### Conditions opératoires :

- Vitesse de mélange : environ 2000tr/min à température ambiante
- Ordre d'incorporation dans le mélangeur :
   ∘ L'huile de tournesol et l'huile végétale oléique,
   ∘ La MGLA,
   ∘ Les additifs
Un prélèvement est effectué après 5 ou 10 minutes de mélange, à température ambiante.
La composition est ensuite mise dans une enceinte réfrigérée à 4°C, ou dans une enceinte thermorégulée à 4°C, pendant au minimum 2 jours.
En sortie de l'enceinte réfrigérée ou thermorégulée, deux situations peuvent être observées :
- Si la composition présente un déphasage, alors elle n'est pas stable.
- Si la composition ne présente pas de déphasage, alors elle est stable.

Par « propriétés organoleptiques stables à la cuisson », on entend, au sens de la présente invention que la composition alimentaire liquide, présente à chaud et à froid un goût et une odeur de beurre, et permet également de garantir à l'aliment qui cuit à l'aide de la présente composition, un goût de beurre. On entend également que la composition selon la présente invention ne développe pas à chaud et à froid une odeur et/ou un goût parasite, notamment un gout rance.

Pour déterminer la stabilité des propriétés organoleptiques de la composition selon la présente invention, le test suivant effectué auprès d'un panel de consommateurs peut notamment être effectué :
Les questions posées et éléments de réponse proposés peuvent porter sur les points suivants :

| **Questions** | **Propositions de réponse** |
|---|---|
| L'appréciation de l'odeur à l'ouverture | - Plutôt une odeur de beurre |
| | - Plutôt une odeur d'huile |
| | - Ni une odeur de beurre, ni une odeur d'huile |
| L'appréciation de l'odeur pendant la cuisson | - Plutôt un goût de beurre |
| | - Plutôt un goût d'huile |
| | - Ni un goût de beurre, ni un goût d'huile |
| L'appréciation du goût des aliments | - Plutôt un goût de beurre |
| | - Plutôt un goût d'huile |
| | - Ni un goût de beurre, ni un goût d'huile |
| L'appétence des aliments après la cuisson | - Très satisfaisant |
| | - Assez satisfaisant |
| | - Ni satisfaisant, ni insatisfaisant |
| | - Pas tellement satisfaisant |
| | - Pas satisfaisant du tout |
| La dorure des aliments après cuisson | - Très dorés |
| | - Assez dorés |
| | - Pas tellement dorés |
| | - Pas dorés du tout |
| La résistance à la chaleur (la composition ne noircit pas) | - La composition résiste très bien à la chaleur |
| | - La composition résiste assez bien à la chaleur |
| | - La composition ne résiste pas très bien à la chaleur |
| | - La composition ne résiste pas du tout à la chaleur |
| Le goût des aliments en comparaison avec d'autres produits de cuisson | - Nettement plus appétissant |
| | - Un peu plus appétissant |
| | - Ni plus ni moins appétissant |
| | - Un peu moins appétissant |
| | - Nettement moins appétissant |

Dès lors que l'appréciation globale du produit satisfait au moins 60% du panel, il est considéré que la propriété relative à la question posée est conforme aux objectifs goût et odeur du produit.

Par « stabilité de stockage », on entend au sens de la présente invention que la composition selon la présente invention se conserve, sans altération de ses propriétés organoleptiques pendant au moins 10 mois. Cela fait ainsi référence à la stabilité organoleptique en cours de vie

La stabilité au stockage des compositions selon la présente invention peut être analysée par un test de vieillissement accéléré. Un test de 8 semaines en vieillissement accéléré équivaut à 12 mois réels à l'abri de la lumière.

Pendant 4, 6 ou 8 semaines lesdites compositions sont soumises à une lumière diffuse et de séances d'analyse sensorielle (le goût et l'odeur notamment) sont ensuite réalisées par comparaison avec des formules témoins non vieillies.

Les tests sont effectués à chaud (température d'environ 180°C, avec des aliments), et à froid (dégustation du produit seul à la température ambiante).

Les éléments suivants sont notamment évalués :
- L'odeur sans aliment
- L'odeur avec aliment
- L'aspect de l'aliment
- La texture de l'aliment
- Le goût de l'aliment

Aussi longtemps que la composition ayant subi un vieillissement accéléré présente un goût et une odeur de beurre acceptable (c'est-à-dire pas de goût de rance et/ou autre odeur/goût parasites), elle est considérée stable pendant la période correspondant au vieillissement accéléré.

Dans un mode de réalisation particulier, l'invention concerne également une composition alimentaire liquide contenant :
- 80% - 90% en poids de la composition d'un mélange d'huiles végétales comprenant 20% - 40% d'huile végétale oléique, notamment l'huile de tournesol oléique, et notamment l'Oléisol®,
- 10%-18% en poids de la composition de matière grasse laitière anhydre qui est un mélange d'au moins deux matières grasses laitières anhydres à points de fusion différents, et compris de 5 à 20°C,
- moins de 1% en poids de la composition d'antioxydant, lequel est dépourvu de propriétés émulsifiantes,
- optionnellement, au moins un additif, notamment un arôme beurre à raison de moins de 1% en poids de la composition.

Dans un mode de réalisation avantageux, la matière grasse laitière anhydre a un point de fusion compris de 8°C à 11°C.

Dans un autre mode de réalisation avantageux, la matière grasse laitière anhydre a un point de fusion de 10°C.

Dans un mode de réalisation avantageux de l'invention, le mélange d'huiles végétales comprend 20% d'huile végétale oléique, notamment l'Oléisol®.

L'Oléisol® (commercialisé par Lesieur) est une huile de tournesol issue des graines de tournesol dit « oléique », naturellement très riche en oméga 9 (de 75 à 90% alors que le tournesol non oléique en contient environ 20%).

La teneur de 20% en huile végétale oléique représente la quantité minimale pour avoir une stabilité organoleptique.

Dans un autre mode de réalisation avantageux de l'invention, le mélange d'huiles végétales comprend 25% d'huile végétale oléique, notamment l'Oléisol®.

La teneur de 25% en huile végétale oléique de la composition selon la présente invention est notamment préférée pour l'utilisation de ladite composition en friture profonde.

Dans un mode de réalisation avantageux de l'invention, l'antioxydant présent dans la composition est le Tocoblend® (Tocobend Vitablend L70IP).

Dans un autre mode de réalisation avantageux de l'invention, la composition contient deux arômes beurre.

Les arômes beurre pouvant être utilisés sont par exemple ceux commercialisés par la société GIVAUDAN (GH-188-638-5 et XF170751)
L'arôme GH-188-638-5 est par exemple caractérisé par son goût crémeux, beurré, frais.

Conformément à l'invention, l'huile végétale autre que l'huile végétale oléique, notamment l'Oléisol®, est choisie dans le groupe comprenant l'huile de tournesol, l'huile de soja, l'huile de maïs, l'huile de pépins de raisin, et les mélanges de ces huiles.

Ces huiles présentent un profil en acide gras similaire, notamment en oméga-6.

Dans un autre mode de réalisation, l'invention concerne une composition alimentaire liquide contenant :
- 80% - 90% en poids de la composition d'un mélange d'huiles végétales comprenant 20% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion compris de 5°C à 20°C,
- moins de 1% en poids de la composition de Tocoblend,
- optionnellement, au moins un arôme beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 25% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion compris de 5°C à 20°C,
- moins de 1% en poids de la composition de Tocoblend,
- optionnellement, au moins un arôme beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 20% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion compris de 5°C à 20°C,
- moins de 1% en poids de la composition d'antioxydant, lequel est dépourvu de propriétés émulsifiantes,
- deux arômes beurre à raison de moins de 1% en poids de la composition.

Dans un autre mode de réalisation l'invention concerne également une composition alimentaire liquide contenant :
- 80% - 90% en poids de la composition d'un mélange d'huiles végétales comprenant 25% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion compris de 5°C à 20°C,
- moins de 1% en poids de la composition d'antioxydant, lequel est dépourvu de propriétés émulsifiantes,
- deux arômes beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 20% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion compris de 5°C à 20°C,
- moins de 1% en poids de la composition de Tocoblend,
- deux arômes beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 25% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion compris de 5°C à 20°C,
- moins de 1% en poids de la composition de Tocoblend,
- deux arômes beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 20% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion de 10°C,
- moins de 1% en poids de la composition d'antioxydant, lequel est dépourvu de propriétés émulsifiantes,
- optionnellement, au moins un arôme beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 25% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion de 10°C,
- moins de 1% en poids de la composition d'antioxydant, lequel est dépourvu de propriétés émulsifiantes,
- optionnellement, au moins un arôme beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 20% - 40% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion de 10°C,
- moins de 1% en poids de la composition d'antioxydant, lequel est dépourvu de propriétés émulsifiantes,
- deux arômes beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 20% - 40% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion de 10°C,
- moins de 1% en poids de la composition de Tocoblend,
- optionnellement, au moins un arôme beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 20% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion de 10°C,
- moins de 1% en poids de la composition de Tocoblend,
- optionnellement, au moins un arôme beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 25% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion de 10°C,
- moins de 1% en poids de la composition de Tocoblend,
- optionnellement, au moins un arôme beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 20% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion de 10°C,
- moins de 1% en poids de la composition de Tocoblend,
- deux arômes beurre à raison de moins de 1% en poids de la composition.

Dans un autre mode de réalisation, l'invention concerne également une composition alimentaire liquide contenant :
- 80% - 90% en poids de la composition d'un mélange d'huiles végétales comprenant 25% d'huile végétale oléique, notamment l'huile de tournesol oléique, et notamment l'Oléisol®,
- 10% - 18% en poids de la composition de matière grasse laitière anhydre à l'état liquide ou à l'état solide, ladite matière grasse ayant un point de fusion de 10°C,
- moins de 1% en poids de la composition de Tocoblend,
- deux arômes beurre à raison de moins de 1% en poids de la composition.

Il est également décrit une composition alimentaire liquide contenant :
- 69,91% d'huile de tournesol,
- 20% d'huile végétale oléique Oléisol®,
- 10% d'une matière grasse laitière anhydre ayant un point de fusion de 10°C,
- 0,03% d'un premier arôme beurre,
- 0,01% d'un deuxième arôme beurre,
- 0,05% de Tocoblend.

Conformément à l'invention, les compositions peuvent être préparées par toute technique connue de l'homme du métier, notamment par mélange dynamique des ingrédients à l'aide d'un mélangeur classiquement utilisé dans le domaine, un mélange de type Ystral

Les compositions selon l'invention apportent aux aliments des caractéristiques gustatives, notamment, un vrai goût de beurre et en même temps résistent aux hautes températures, ne noircissent pas. Elles peuvent dont être utilisées dans de nombreuses applications, comme huile de cuisson ou de friture plate. Elles peuvent notamment être utilisées comme friture plate pour saisir et rôtir les viandes, les volailles et les poissons, pour poêler les légumes ou encore pour graisser les plaques ou les moules. Elles peuvent également être incorporées dans des sauces ou dans des préparations sucrées (gâteaux, tartes, pâtes à crêpes).

Les compositions selon l'invention peuvent se conserver de 4°C à 25°C pendant au moins 10 mois sans altération de leurs qualités nutritionnelles ou organoleptiques. La température idéale d'utilisation est la température ambiante.

Les exemples 1 à 10 et les figures 1A, 1B, 2, 3, 4, 5, 6, 7, 8A, 8B, 9A, 9B, 9C, 9D, 9E, 9F, 9G, 9H, 10, 11, et 12 qui suivent illustrent l'invention, mais ne la limitent pas.
La **figure 1A** représente la texture et la limpidité d'une *formule non comprise* dans l'invention à température ambiante.
La **figure 1B** représente la texture et la limpidité d'une *formule non comprise* dans l'invention à une température de 40°C.
La **figure 2** représente la texture et la limpidité d'une formule comprise dans l'invention (G21) à température ambiante, à une température de 4°C, et à une température de 40°C.
La **figure 3** représente la différence d'aspect entre une *formule non comprise* dans l'invention (formule 31) et une formule comprise dans l'invention (G21), avant mise en étuve à 40°C et 50°C.
La **figure 4** représente la différence d'aspect entre une *formule non comprise* dans l'invention (formule 31) et une formule comprise dans l'invention (G21), après 7 jours de mise en étuve à 40°C et 50°C.
La **figure 5** représente la différence d'aspect entre une *formule non comprise* dans l'invention (formule 31) et une formule comprise dans l'invention (G21), après 14 jours de mise en étuve à 40°C et 50°C.
La **figure 6** représente la différence d'aspect entre une formule comprise dans l'invention (G21 ne contenant pas d'émulsifiant) et la même formule G21 contenant en plus un émulsifiant (cette dernière *formule n'étant donc pas comprise* dans l'invention).
La **figure 7** représente la différence d'aspect d'une formule comprise dans l'invention (G21 ne contenant pas d'émulsifiant) et la même formule G21 contenant en plus un émulsifiant (cette dernière *formule n'étant donc pas comprise* dans l'invention), un jour après la mise en bouteille desdites formules.
La **figure 8A** représente la différence d'aspect, à température ambiante, de six compositions (G18, G21, G23, G24, G25, G26), dont deux d'entre elles sont comprises dans l'invention (G18 et G21).
La **figure 8B** représente la différence d'aspect, à température ambiante, de six compositions, dont deux d'entre elles sont comprises dans l'invention (G18 et G21).
La **figure 9A** représente l'éclaboussure générée par l'huile de tournesol pendant la cuisson à 180°C de pommes de terre rissolées.
La **figure 9B** représente l'éclaboussure générée par la formule G18 comprise dans l'invention pendant la cuisson à 180°C de pommes de terre rissolées.
La **figure 9C** représente l'éclaboussure générée par la formule G21 comprise dans l'invention pendant la cuisson à 180°C de pommes de terre rissolées.
La **figure 9D** représente l'éclaboussure générée par la *formule G23 non comprise* dans l'invention pendant la cuisson à 180°C de pommes de terre rissolées.
La **figure 9E** représente l'éclaboussure générée par la *formule G24 non comprise* dans l'invention pendant la cuisson à 180°C de pommes de terre rissolées.
La **figure 9F** représente l'éclaboussure générée par la *formule G25 non comprise* dans l'invention pendant la cuisson à 180°C de pommes de terre rissolées.
La **figure 9G** représente l'éclaboussure générée par la *formule G26 non comprise* dans l'invention pendant la cuisson à 180°C de pommes de terre rissolées.
La **figure 9H** représente l'éclaboussure générée par le beurre pendant la cuisson à 180°C de pommes de terre rissolées.
La **figure 10** représente la coloration des pommes de terre rissolées à la poêle avec de l'huile de tournesol, les formules G18, G21, G23, G24, G25, G26 et le beurre.
La **figure 11** représente l'aspect du surplus de matières restant après cuisson des pommes de terre dans la poêle, avec de l'huile de tournesol, les formules G18, G21, G23, G24, G25, G26 et le beurre.
La **figure 12** représente l'aspect de deux compositions, après chauffage à la poêle pendant 3min, sans aliment. L'une des compositions est comprise dans l'invention (G21), l'autre (formule 31) non.

### EXEMPLE 1 : MGLA à différents points de fusion

Deux formules de l'invention ont été testées en cuisson : G2 et G4.

### Composition G2 :

Huile de tournesol : 48,95%
   Oléisol : 39%
MGLA (Point de fusion à **5° C**) : 12%
   Tocoblend : 0,05%
Arôme beurre GH-188-638-5: 0,02%

### Composition G4 :

Huile de tournesol : 48,93%
Oléisol : 39%
MGLA (Point de fusion à **10° C**) : 12%
Tocoblend : 0,05%
Arôme beurre GH-188-638-5 : 0,02%

G2 et G4 se différencient donc uniquement par le point de fusion de la MGLA. Les résultats sont synthétisés dans les tableaux ci-après.
- Sans matière à frire:

| **Formules utilisées** | **Remarques** |
|---|---|
| G2 témoin | Odeur légère de beurre |
| G2 4 semaines | Odeur très légère de beurre |
| G4 témoin | La note beurre apparaît plus forte en cours de chauffage, puis odeur d'huile chaude |
| G4 4 semaines | Beurre léger |
| | Odeur d'huile chaude |
| G4 6 semaines | Odeur d'huile chaude et beurre |

- Avec matière à frire (poulet) (environ 180°C) :

| **Formules utilisées** | **Remarques** |
|---|---|
| G2 témoin | Odeur légère de beurre |
| G2 4 semaines | Odeur d'huile chaude et de beurre |
| | Pas de goût désagréable |
| G4 témoin | La note beurre apparaît plus forte en cours de chauffage, puis odeur d'huile chaude |
| | Pas de goût désagréable |
| G4 4 semaines | Bonne odeur de poulet à la cuisson |
| | Pas de goût désagréable |
| G4 6 semaines | Odeur d'huile chaude et beurre |
| | Pas de goût désagréable |

### EXEMPLE 2 : Comparaison des propriétés organoleptiques de différentes compositions

### Formule comparative 31 non comprise dans l'invention :

Huile de tournesol raffinée : 41.6%
Huile de tournesol oléique (Oléisol®) : 42,5%
MGLA avec un point de fusion 40°C en poudre : 15%
Poudre de babeurre : 0,8%
Antioxydants E306 : 0,05%
Arôme beurre : 0,02%
Extrait de paprika : 0,0005%

### Formule G18 comprise dans l'invention :

Huile de tournesol : 48,91%
Huile Oléisol® : 39%
MGLA avec un point de fusion à 10°C : 12%
Arôme beurre GH-188-638-5 : 0,03%
Arôme beurre XF170751 : 0,01%
Tocoblend : 0,05%

### Formule G21 comprise dans l'invention :

Huile de tournesol : 69,91%
Huile Oléisol® :20%
MGLA avec un point de fusion à 10°C : 10%
Arôme beurre XF170751 : 0,01%
Arôme beurre GH-188-638-5 : 0,03%
Tocoblend : 0,05%
Les formules ont subi un vieillissement accéléré pendant 4, 6 et 8 semaines (elles ont été soumises à une lumière diffuse).

### Résultats :

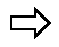 Evaluation organoleptique à froid :

| **Formules** | **Odeur** | **Goût** |
|---|---|---|
| *Formule 31 témoin* | Beurre | Note sucrée acidulée suivie d'un goût de beurre noisette, note ronde gourmande pâtissière |
| G18 témoin | Beurre, acidulé, laitière à tendance fromagère | Beurre, rond, bon équilibre beurre/huile |
| G21 témoin | Beurre, acidulé, laitière à tendance fromagère | Beurre |
| *Formule 31 4semaines* | Beurre fromager | Légère perte aromatique, beurre légèrement plus fromager mais pas de goût désagréable |
| G18 4semaines | Beurre | Beurre |
| G21 4semaines | Beurre | Beurre léger |
| *Formule 31 6semaines* | Beurre fromager, | Perte aromatique mais pas de goût désagréable |
| G18 6semaines | Beurre léger | Beurre léger |
| G21 6semaines | Beurre léger | Beurre léger |
| *Formule 31 8semaines* | Rance | Rançoide |
| G18 8semaines | Très léger beurre | *Données non disponibles* |
| G21 8semaines | Très léger beurre | Beurre léger |

### EXEMPLE 3 : Stabilité à 40°C

Appareil utilisé : un mélangeur de type Ystral de 50Kg avec un rotor stator standard relié à une pompe à palette permettant l'acheminement du mélanger vers un échangeur à surface raclé réfrigéré.

### Conditions opératoires :

- Vitesse de l'échangeur : 450 tour/minute,
- Température d'environ 8-9°C,
- Débit de la pompe constant : 1,8Kg/minute.
- Batch de 40kg et 30kg.
- Fonte de la MGLA dans une étuve maintenue à 50°C ou au bain-marie (70°C),
- Ordre d'incorporation dans le mélangeur :
   ∘ L'huile de tournesol et l'huile végétale oléique,
   ∘ La MGLA,
   ∘ Les additifs

Un prélèvement est effectué à 5minutes de mélange. Lors du prélèvement en sortie d'échangeur à surface raclée, le mélange est agité faiblement, en position 3 (environ 2000-2500tr/min)

La température de la composition en sortie de mélangeur est mesurée. Si nécessaire, le mélange est refroidi. La température de sortie doit être de 18-22°C. La composition est ensuite mise dans une enceinte thermorégulée pendant au minimum 2 jours.

### Formule comparative 82 non compris dans l'invention :

Huile de tournesol : 48,45%
Oléisol® : 39%
MGLA à point de fusion à 40°C : 10%
Arôme beurre : 2%
Emulsifiant (Poudre de babeurre) : 0,5%
Tocoblend : 0,05%

### Formule comparative 86 non comprise dans l'invention :

Huile de tournesol : 48,95%
Oléisol® : 39%
MGLA à point de fusion à 40°C : 12%
Tocoblend : 0,05%

### Formule comparative 87 non comprise dans l'invention :

Huile de tournesol : 48,942%
Oléisol® : 39%
MGLA à point de fusion à 40°C : 12%
Tocoblend : 0,05%
β-carotène : 0,008%

### Résultats :

| Essais | Aspect dans l'enceinte à 40°C | Aspect à température ambiante après test à 40°C |
|---|---|---|
| | 5 minutes de mélange | 5 minutes de mélange |
| *82* | Limpide, homogène, précipitation de l'émulsifiant en fond de bouteille | Déphasage |
| *86* | Limpide, homogène | Déphasage |
| *87* | Limpide, homogène | Déphasage |

La stabilité des compositions telles que décrites ci-dessus (82, 86 et 87) a été testée à température ambiante et à 40°C.

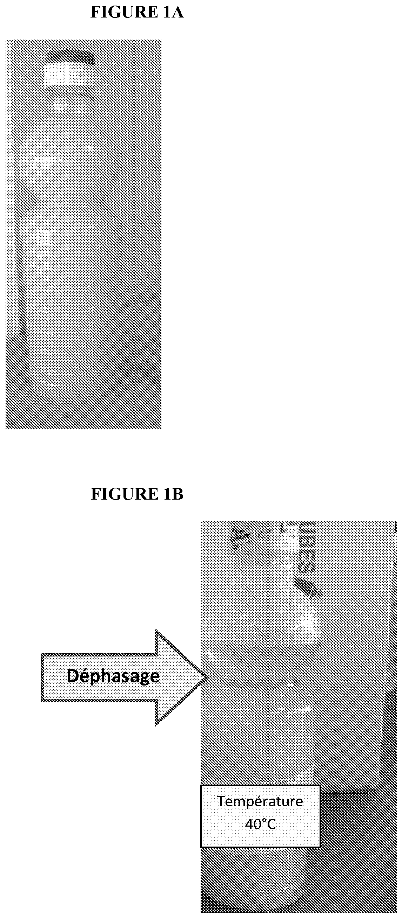

Les résultats sont présentés dans les **figures 1A** et **1B****.**

A température ambiante, ces compositions ne présentent pas de déphasage.

A 40°C, ces compositions présentent un déphasage. Ce dernier est visible sur la **figure 1B****,** à environ 1/3 de la bouteille.

Ces compositions ne sont donc pas stables à 40°C.

La stabilité d'une composition de l'invention (G21 telle que décrite ci-dessus) a également été testée à différentes températures (température ambiante, 4°C, 40°C).

### Conditions opératoires :

Appareil utilisé : un mélangeur de type Ystral avec un rotor stator standard.
- Vitesse de mélange : environ 2000tr/min à température ambiante
- Ordre d'incorporation dans le mélangeur :
   ∘ L'huile de tournesol et l'huile végétale oléique,
   ∘ La MGLA,
   ∘ Les additifs

Un prélèvement est effectué après 5 minutes de mélange, à température ambiante.

La composition est ensuite mise dans une enceinte thermorégulée pendant au minimum 2 jours.

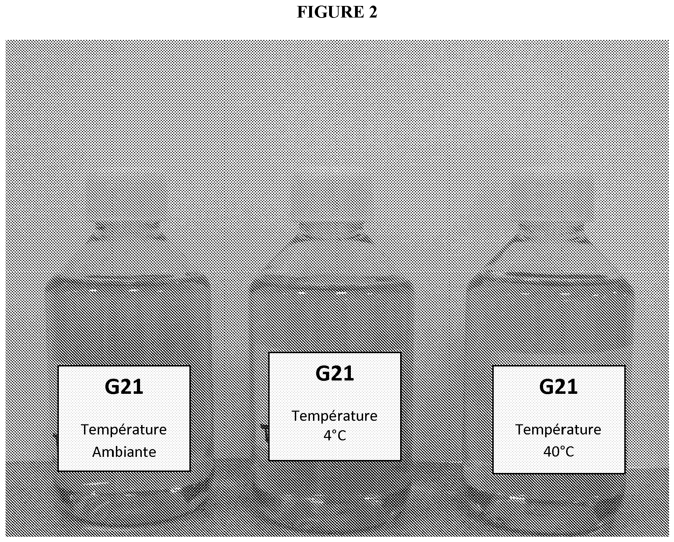

Les résultats sont présentés dans la **figure 2****.**

La composition ne présente aucun déphasage aux températures testées, notamment à 40°C.

Cette composition est donc stable à 40°C.

### EXEMPLE 4 : Tests de cuisson

### Conditions des tests de cuisson :

- Tests réalisés en cuisine sur plaque électrique vitrocéramique
- Temps de préchauffage des poêles avec matière grasse : 3minutes thermostat 4 (feu moyen)
- Temps de cuisson : 5 minutes
- Quantité de matière grasse : environ 1 cuillère à soupe

### Formule G21 (formule comprise dans l'invention) :

Huile de tournesol : 69,91%
Oléisol : 20%
Tocoblend : 0,05%
MGLA à point de fusion à 10°C : 10%
Arôme GH-188-638-5: 0,03%
Arôme XF 170751 : 0,01%

### Résultats :

| **G21 2 semaines** | |
|---|---|
| Odeur sans aliment | Beurre, fromagé, puis odeur de l'huile chaude |
| Odeur avec aliment | Odeur caractéristique du poulet en cuisson |
| Aspect de l'aliment | Moelleux, coloré |
| Goût de l'aliment | Goût caractéristique du poulet en cuisson et léger goût de beurre |

| **G21 4 semaines** | |
|---|---|
| Odeur sans aliment | Beurre, fromagé, puis odeur de l'huile chaude |
| Odeur avec aliment | Odeur caractéristique du poulet en cuisson |
| Aspect de l'aliment | Moelleux, coloré |
| Goût de l'aliment | Goût caractéristique du poulet en cuisson et léger goût de beurre |

| **G21 6 semaines** | |
|---|---|
| Odeur sans aliment | Léger beurre, puis odeur de l'huile chaude |
| Odeur avec aliment | Odeur caractéristique du poulet en cuisson |
| Aspect de l'aliment | Moelleux, coloré |
| Goût de l'aliment | Goût caractéristique du poulet en cuisson et léger goût de beurre |

| **G21 8 semaines** | |
|---|---|
| Odeur sans aliment | Léger beurre, puis odeur de l'huile chaude |
| Odeur avec aliment | Odeur caractéristique du poulet en cuisson |
| Aspect de l'aliment | Moelleux, coloré |
| Goût de l'aliment | Goût caractéristique du poulet en cuisson et très léger goût de beurre |

Une stabilité des propriétés organoleptiques à la cuisson est donc observée.

### EXEMPLE 5 : Evaluation des propriétés organoleptiques

Le goût et l'odeur de la composition selon la présente invention ont été testés sur un panel de 130 personnes.

| Evaluation de l'odeur | TOTAL | Acheteuses Lesieur | Utilisatrices d'huile le plus souvent | Utilisatrices mixtes d'huile et beurre |
|---|---|---|---|---|
| | 130 | 98 | 80 | 130 |

| **Avant la cuisson** | | | | |
|---|---|---|---|---|
| Appréciation de l'odeur à l'ouverture | 85 | 87 | 82 | 85 |
| Plutôt une odeur de beurre | 65 | 66 | 67 | 65 |
| Odeur de beurre à l'ouverture | 80 | 81 | 76 | 82 |

| **Pendant la cuisson** | | | | |
|---|---|---|---|---|
| Appréciation de l'odeur pendant la cuisson | 90 | 91 | 88 | 88 |
| Plutôt une odeur de beurre | 62 | 59 | 68 | 58 |

| **Après la cuisson** | | | | |
|---|---|---|---|---|
| Dorure des aliments | 93 | 93 | 92 | 94 |
| Aspects des aliments cuits | 90 | 93 | 88 | 90 |
| Dorure des aliments vs Autres produits (plus dorés) | 88 | 88 | 87 | 89 |
| Aspect des aliments cuits vs Autres produits (plus appétissants) | 59 | 66 | 59 | 59 |
| Appréciation du goût des aliments cuits | 92 | 91 | 95 | 90 |
| Appréciation du goût des aliments cuits vs Autres produits | 56 | 62 | 59 | 55 |
| Plutôt un goût de beurre | 59 | 61 | 69 | 53 |
| Goût de beurre des aliments cuits | 86 | 89 | 83 | 91 |

Les aliments cuisinés avec une composition selon la présente invention avaient un goût de beurre, de manière encore plus marquée pour les utilisatrices régulières d'huile.

L'odeur de beurre est également relevée, à l'ouverture et pendant la cuisson.

### EXEMPLE 6 : Stabilité au stockage (Stabilité organoleptique en cours de vie)

La stabilité au stockage des compositions selon la présente invention est analysée par un test de vieillissement accéléré.

Pendant 2, 4 et 6 les compositions sont soumises à une lumière diffuse et des séances d'analyse sensorielle (goût et odeur notamment) par comparaison avec des formules témoins non vieillies sont ensuite effectuées.

Les tests sont effectués à chaud et à froid, avec deux compositions selon la présente invention (G18 et G21), et une *formule comparative non comprise* dans l'invention (G20).

| **Ingrédients** | **G18** | ***G20*** | **G21** |
|---|---|---|---|
| Huile de Tournesol (non oléique) | 48,91% | *89,91%* | 69,91% |
| Oléisol® | 39% | *0%* | 20% |
| Tocoblend | 0,05% | *0,05%* | 0,05% |
| MGLA à point de fusion à 10°C | 12% | *10%* | 10% |
| Arôme GH188-638-5 | 0,03% | *0,03¨%* | 0,03% |
| Arôme XF170751 | 0,01% | *0,01%* | 0,01% |

### Evaluation organoleptique à froid :

| **Produits** | **Odeur** | **Goût** |
|---|---|---|
| G18 Témoin | Beurre acidulé, | Beurre |
| *G20 Témoin* | *Beurre acidulé, Odeur laitière à tendance fromagère* | *Beurre moins prononcé que G18 Témoins* |
| G21 témoin | Beurre acidulé, | Beurre |
| G18 4semaines | Beurre | Beurre |
| *G20 4semaines* | *Beurre* | *Beurre fromagé* |
| G21 4semaines | Beurre | Beurre fromagé |
| G18 6semaines | Beurre plus léger | Beurre léger |
| *G20 6semaines* | *Beurre plus léger et rance* | *Beurre plus léger, rance de l'huile prédominant* |
| G21 6semaines | Beurre plus léger | Beurre léger |
| G18 8semaines | Très léger beurre | *Données non disponibles* |
| *G20 8semaines* | *Rance et très léger beurre* | *Rance, plastique et très léger goût de beurre, légère acidité* |
| G21 8semaines | Très léger beurre | Très léger goût de beurre, légère acidité |

### Evaluation organoleptique à la poêle :

| **G18 Témoin** | |
|---|---|
| Odeur sans aliment | Beurre dans un premier temps, puis odeur de l'huile chaude |
| Odeur avec aliment | Proche du beurre Odeur caractéristique du poulet en cuisson |
| Aspect de l'aliment | Coloration proche de l'huile mais non frit. Texture à mi-chemin entre le beurre et l'huile |
| Goût de l'aliment | Goût caractéristique du poulet légèrement beurré |

| ***G20 Témoin*** | |
|---|---|
| *Odeur sans aliment* | *Beurre dans un premier temps, puis odeur de l'huile chaude* |
| *Odeur avec aliment* | *Proche du beurre Odeur caractéristique du poulet en cuisson* |
| *Aspect de l'aliment* | *Coloration proche de l'huile mais non frit. Texture à mi-chemin entre le beurre et l'huile* |
| *Goût de l'aliment* | *Goût caractéristique du poulet légèrement beurré* |

| **G21 Témoin** | |
|---|---|
| Odeur sans aliment | Beurre dans un premier temps, puis odeur de l'huile chaude |
| Odeur avec aliment | Proche du beurre Odeur caractéristique du poulet en cuisson |
| Aspect de l'aliment | Coloration proche de l'huile mais non frit. Texture à mi-chemin entre le beurre et l'huile |
| Goût de l'aliment | Goût caractéristique du poulet légèrement beurré |

| **G18 4semaines** | |
|---|---|
| Odeur sans aliment | Odeur de beurre, puis de l'huile chaude |
| Odeur avec aliment | Proche du beurre Odeur caractéristique du poulet en cuisson |
| Aspect de l'aliment | Coloration proche de l'huile mais non frit. Texture à mi-chemin entre le beurre et l'huile |
| Goût de l'aliment | Goût caractéristique du poulet légèrement beurré |

| ***G20 4semaines*** | |
|---|---|
| *Odeur sans aliment* | *Odeur de l'huile chaude, léger rance* |
| *Odeur avec aliment* | *Odeur caractéristique du poulet en cuisson* |
| *Aspect de l'aliment* | *Coloration proche de l'huile mais non frit. Texture à mi-chemin entre le beurre et l'huile* |
| *Goût de l'aliment* | *Pas de transfert de goût rance sur le poulet* |

| **G21 4semaines** | |
|---|---|
| Odeur sans aliment | Odeur de l'huile chaude |
| Odeur avec aliment | Odeur caractéristique du poulet en cuisson |
| Aspect de l'aliment | Coloration proche de l'huile mais non frit. Texture à mi-chemin entre le beurre et l'huile |
| Goût de l'aliment | Goût caractéristique du poulet légèrement beurré |

| **G18 6semaines** | |
|---|---|
| Odeur sans aliment | Légère odeur de beurre, puis odeur de l'huile chaude |
| Odeur avec aliment | Apparition de l'odeur de poulet en cours de cuisson |
| | Odeur de poulet plus prononcée qu'avec le témoin |
| Aspect de l'aliment | Coloration proche de l'huile mais non frit. Texture à mi-chemin entre le beurre et l'huile |
| Goût de l'aliment | Goût caractéristique du poulet légèrement beurré. |

| ***G20 6semaines*** | |
|---|---|
| *Odeur sans aliment* | *Très légère odeur de beurre, puis odeur de l'huile chaude* |
| *Odeur avec aliment* | *Odeur du poulet en cuisson* |
| *Aspect de l'aliment* | *Coloration proche de l'huile mais non frit. Texture à mi-chemin entre le beurre et l'huile* |
| *Goût de l'aliment* | *Pas de transfert du goût rance sur le poulet.* |

| **G21 6semaines** | |
|---|---|
| Odeur sans aliment | Très légère odeur de beurre, puis odeur de l'huile chaude |
| Odeur avec aliment | Odeur du poulet en cuisson |
| Aspect de l'aliment | Coloration proche de l'huile mais non frit. Texture à mi-chemin entre le beurre et l'huile |
| Goût de l'aliment | Goût caractéristique du poulet légèrement beurré. |

Que ce soit à chaud ou à froid, les compositions G18 et G21 ont une évolution très proche.

Au bout de 6 semaines, les compositions présentent toujours une odeur de beurre et confère un bon goût à l'aliment.

### EXEMPLE 7 : Comparaison de la stabilité physique à 40°C et 50°C d'une composition de l'art antérieur et d'une composition selon la présente invention

Les deux formules testées sont les suivantes :
- La formule 31 décrite dans la demande internationale WO 2011/055072 (*formule non comprise* dans l'invention)
- La formule G21 selon la présente invention

| | **Formule 31** | **Formule G21** |
|---|---|---|
| **Ingrédients** | - 41,6% Huile de tournesol | - 69,91% Huile de tournesol |
| | - 42,5% Oléisol | - 20% Oléisol |
| | - 15% MGLA PF40 | - 10% MGLA PF10 |
| | - 0,05% Tocoblend | - 0,05% Tocoblend |
| | - 0,02% arome GH | - 0,03% arome GH |
| | - 0,8% poudre de babeurre | - 0,01% arome XF |
| | - 0,0005% de paprika | |
| **Aspect à froid** (environ 4°C). | Opaque (couleur jaune crème), visqueux, similaire au produit Debic | Translucide, liquide, similaire à une huile |

Les compositions sont testées aux températures de 40°C et 50°C avant la mise en étuve à la température souhaitée, après 7 jours en étuve, et après 14 jours en étuve.

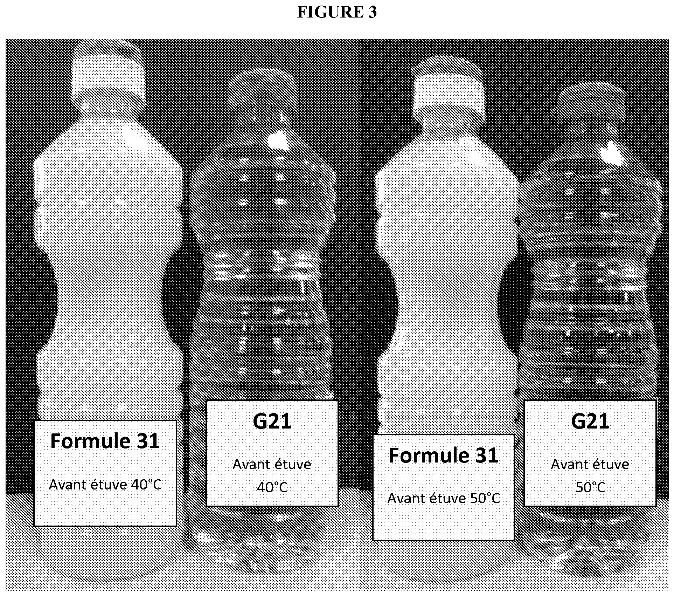

Les résultats avant la mise en étuve sont présentés dans la **figure 3****.**

Avant la mise en étuve, on note que la formule 31 est opaque de couleur jaune crème et plus consistante ; tandis que la formule G21 est translucide (couleur huile) et liquide.

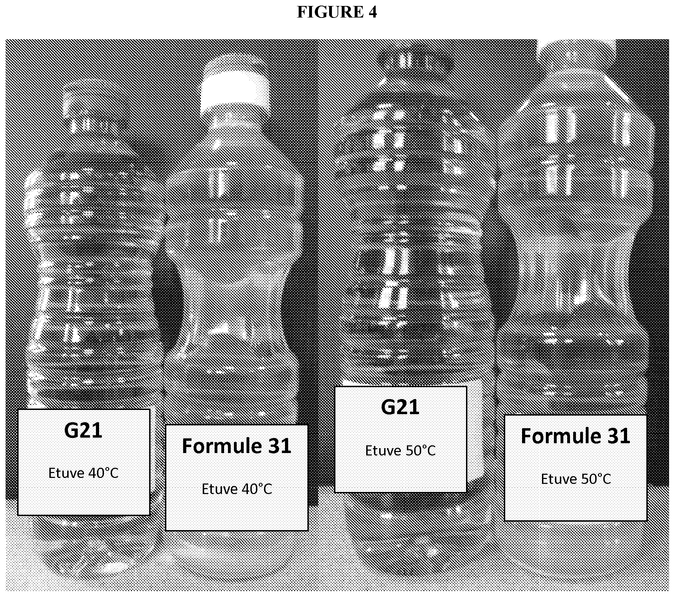

Les résultats après 7 jours en étuve sont présentés dans la **figure 4****.**

Après 7 jours en étuve, on observe, aussi bien à 40°C qu'à 50°C, que :
- La formule 31 n'est plus translucide mais trouble avec un dépôt qui s'est formé au fond de la bouteille.
- La formule G21 n'a pas évolué. Elle est toujours translucide (couleur huile) et liquide.

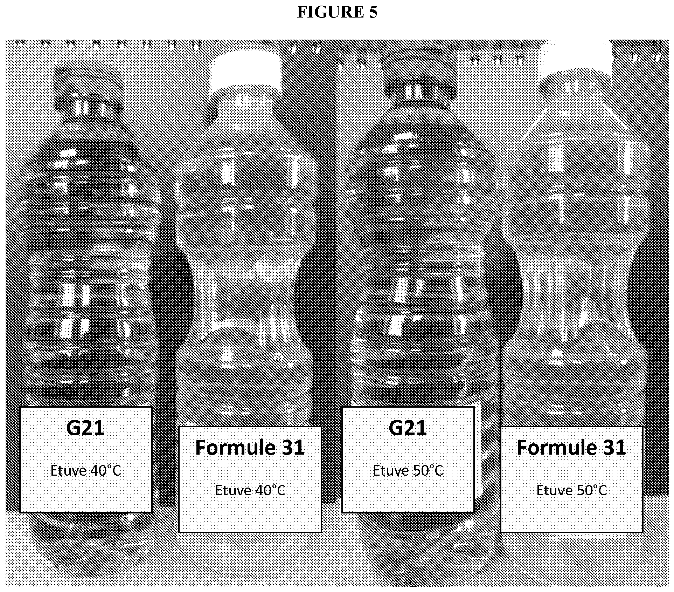

Les résultats après 14 jours en étuve sont présentés dans la **figure 5****.**

Après 14 jours en étuve, on observe, aussi bien à 40°C qu'à 50°C, que :
- La formule 31 présente toujours un trouble et un dépôt.
- La formule G21 n'a pas évolué entre 7 jours et 14 jours, et ce quelle que soit la température. Elle est toujours translucide (couleur huile) et liquide.

### EXEMPLE 8 : Effet de l'émulsifiant dans une composition selon la présente invention

Les deux formules testées sont les suivantes :
- La formule 30 décrite dans la demande internationale WO 2011/055072 (*formule non comprise* dans l'invention)
- La formule G21 selon la présente invention

| | **Formule 30** | **Formule G21** |
|---|---|---|
| **Ingrédients** | - 41,6% Huile de tournesol | - 69,91% Huile de tournesol |
| | - 42,5% Oléisol | - 20% Oléisol |
| | - 15% MGLA PF40 | - 10% MGLA PF10 |
| | - 0,05% Tocoblend | - 0,05% Tocoblend |
| | - 0,02% arome GH | - 0,03% arome GH |
| | - 0,9% Radiamuls 2902 | - 0,01% arome XF |
| | - (E471) | |
| | - 0,0005% de paprika | |
| **Aspect à froid.** (environ 4°C). | Opaque (couleur jaune crème), visqueux, similaire au produit Debic | Translucide, liquide, similaire à une huile |

Dans cet exemple, l'émulsifiant Radiamuls 2902 (E471) présent dans la formule 30 a été ajouté dans la formule G21 (à une teneur de 0,09%).

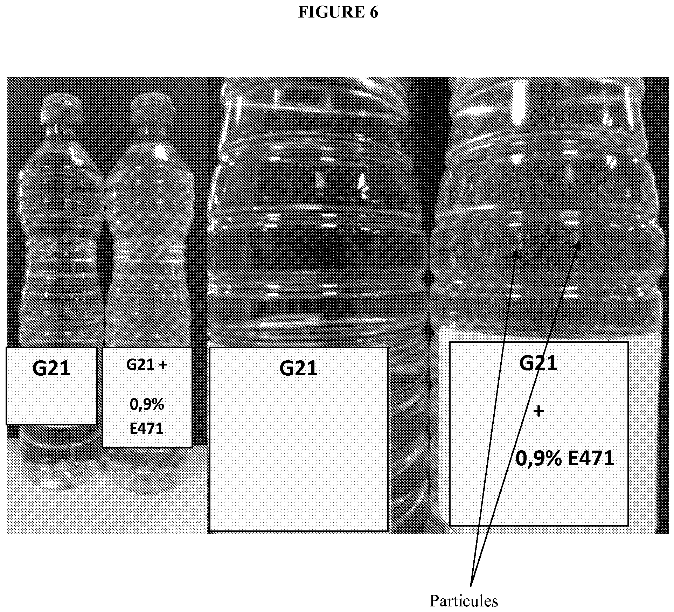

L'aspect des deux formules G21 (formule comprise dans l'invention) et G21+0,9% E4741 (*formule non comprise* dans l'invention) a ensuite été comparé, et les résultats sont présentés dans la **figure 6****.**

On observe que le mélange n'est pas homogène en présence de l'émulsifiant. En effet, de petites particules sont présentes dans la composition. Ces particules correspondent à l'émulsifiant.

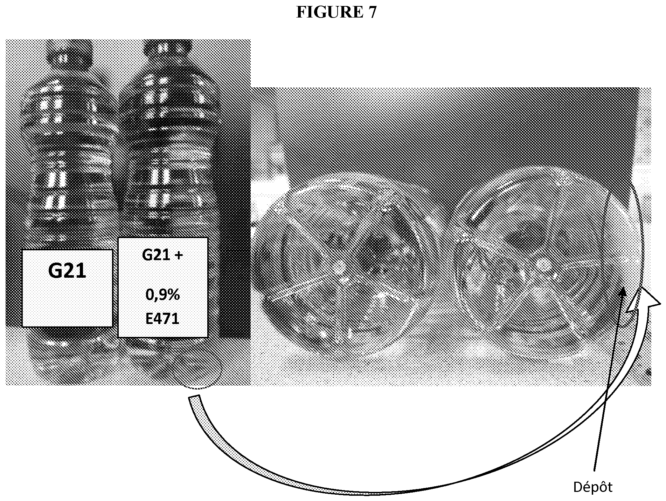

L'aspect des deux formules un jour après la mise en bouteille des compositions a également été comparé, et les résultats sont présentés dans la **figure 7****.**

Dès un jour après la mise en bouteille, la formule G21 contenant l'émulsifiant Radiamuls 2902 (E471) présente un dépôt au fond de la bouteille.

### EXEMPLE 9 : Comparaison entre des compositions contenant de l'émulsifiant et des compositions ne contenant pas d'émulsifiant

Les formules suivantes ont été testées :

| **Ingrédients** | **G18 sans lécithine** | **G21 sans lécithine** | **G23** | **G24** | **G25** | **G26** |
|---|---|---|---|---|---|---|
| Arôme GH-188-638-5 | 0,03% | 0,03% | 0,03% | 0,03% | 0,03% | 0,03% |
| Arôme XF170751 | 0,01% | 0,01% | 0,01% | 0,01% | 0,01% | 0,01% |
| Tocoblend | 0,05% | 0,05% | 0,05% | 0,05% | 0,05% | 0,05% |
| MGLA PF 10 | 10% | 10% | 10% | 10% | 10% | 10% |
| Huile de tournesol | 48,91% | 69,91% | 69,51% | 69,51% | 69,51% | 69,51% |
| Oléisol | 39% | 20% | 20% | 20% | 20% | 20% |
| Lécithine | | | 0,2% | 0,4% | 0,6% | 0,8% |

Les formules G18 et G21 sont des formules comprises dans l'invention.

Les formules G23, G24, G25 et G26 ne sont *pas des formules comprises* dans l'invention.

### Avant cuisson :

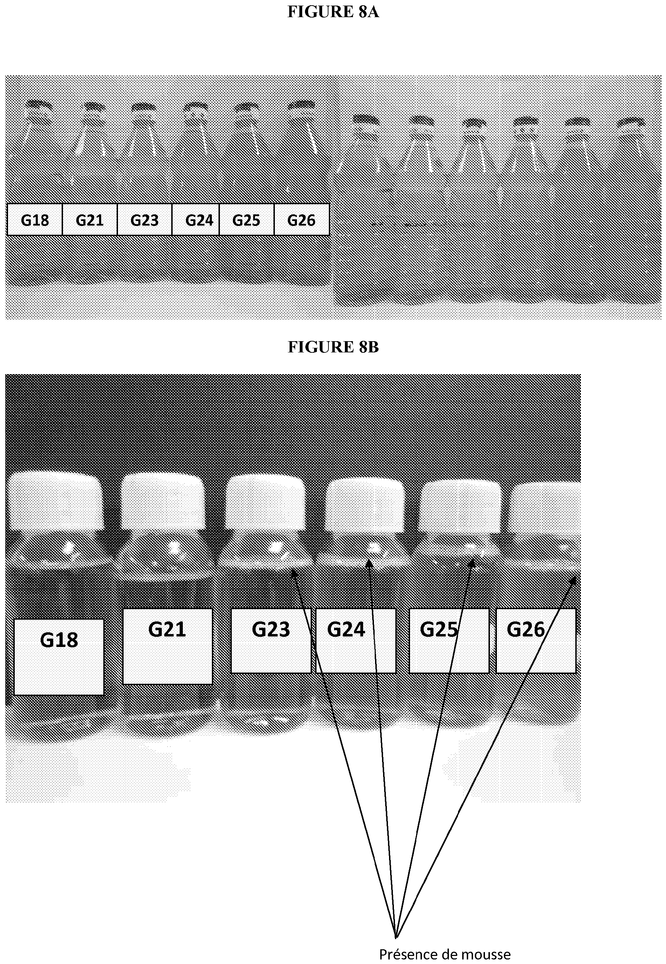

L'aspect des formules G18, G21, G23, G24, G25 et G26 mentionnées ci-dessus a été comparé à température ambiante. Les résultats sont présentés dans les **figures 8A et 8B****.**

Il peut ainsi être observé que plus on augmente la teneur en lécithine, plus le produit est coloré et trouble **(****figure 8A****).**

Il peut ainsi être observé qu'en présence de lécithine dans les formules G23 à G26, il y a présence d'une mousse en surface **(****figure 8B****).**

### En cours de cuisson :

Les formules G18, G21, G23, G24, G25 et G26 mentionnées ci-dessus ont aussi été testées en cuisson à la poêle avec des pommes de terre rissolées surgelées, en comparaison avec de l'huile de tournesol et du beurre, dans les mêmes conditions, à savoir dans la poêle à feu moyen.

### 1/ Eclaboussure

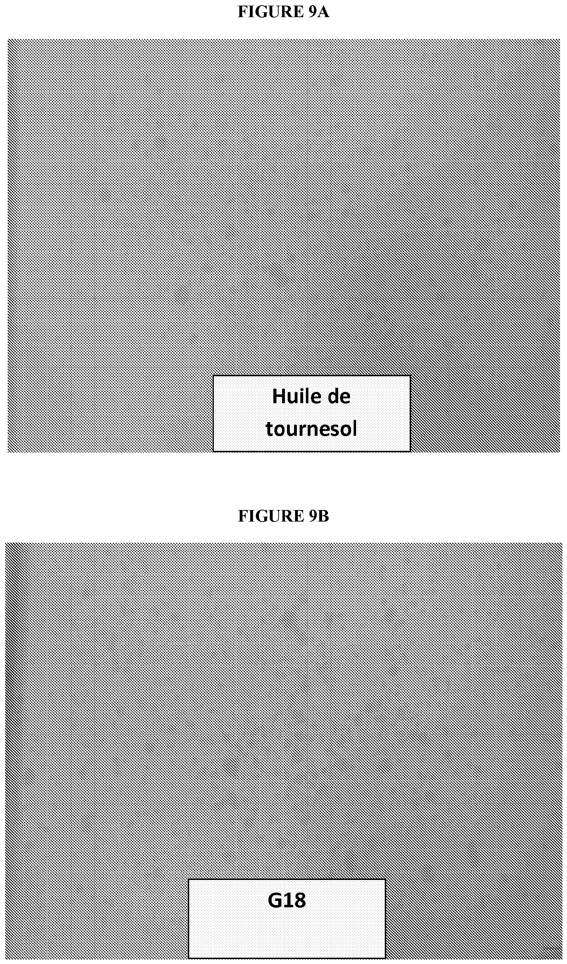

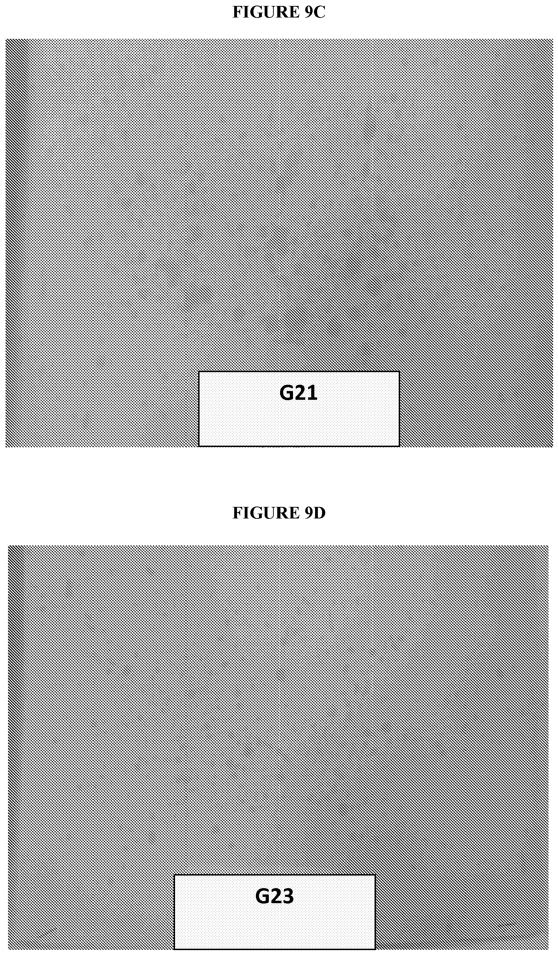

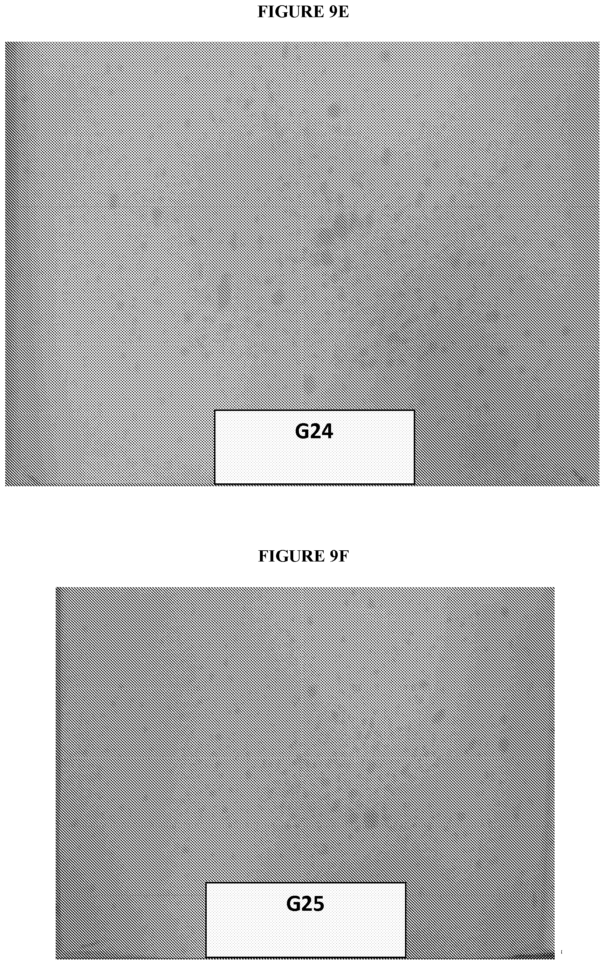

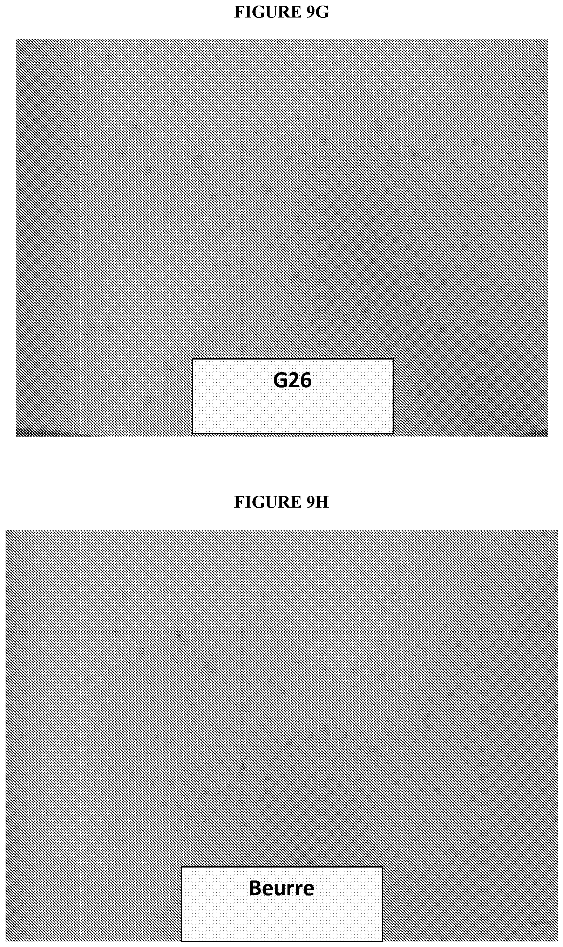

L'éclaboussure pendant la cuisson à 180°C des pommes de terre rissolées avec les différentes compositions mentionnées ci-dessus a été comparée, à celle de l'huile de tournesol et du beurre. Les résultats sont présentés aux **figures 9A, 9B****,** **9C, 9D****,** **9E, 9F****,** **9G,** et **9H****.** Les différents essais ne montrent pas de différence significative entre le tournesol, les formules sans lécithine et les formules avec lécithine. On observe un peu moins d'éclaboussures pour la cuisson au beurre que pour les autres produits testés. Néanmoins, le nuage d'éclaboussures est très proche entre les différentes matières grasses testées.

### 2/ Cuisson des pommes de terre

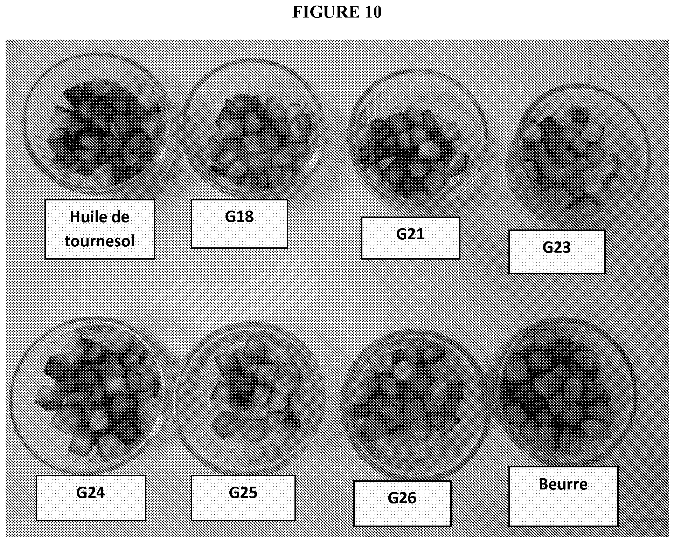

La coloration des pommes de terre cuites avec les différentes formules mentionnées ci-dessus, ainsi qu'avec de l'huile de tournesol et le beurre est comparée. Les résultats sont présentés dans la **figure 10****.**

Il n'y a pas vraiment de différence de coloration des pommes de terres cuite avec les formules G18, G21, G23, G24, G25 et G26. Néanmoins, les pommes de terre cuites avec l'huile de tournesol et le beurre sont plus colorées (voire noires) avec quelques dépôts pour celles cuites au beurre.

### Après cuisson :

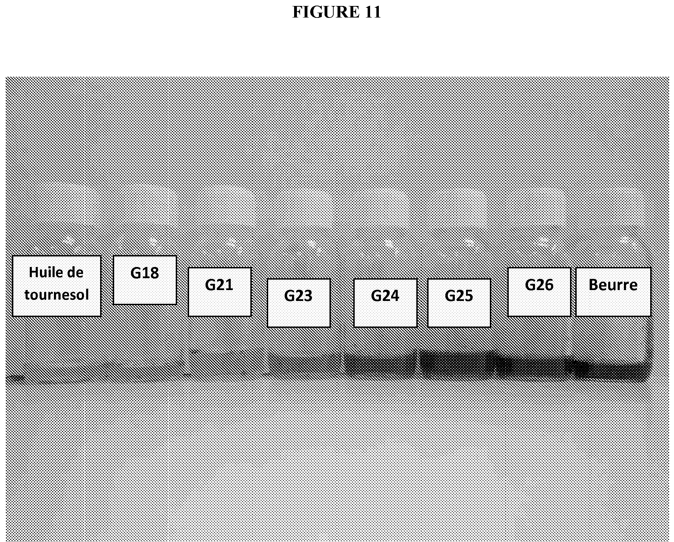

Le surplus de matières restant après cuisson dans la poêle avec les formules G18, G21, G23, G24, G25 et G26 mentionnées ci-dessus est prélevé. Les résultats sont donnés dans la **figure 11****.**

On constate que plus la teneur en lécithine est importante dans la formule, plus le surplus de cette dernière a noirci dans la poêle contrairement aux formules « huile de tournesol » et aux formules sans lécithine G18 et G21.

Cela prouve donc bien que les formules G18 et G21 de l'invention ne noircissent pas à la cuisson.

### EXEMPLE 10 : Comparaison de cuisson à la poêle entre une formule de l'art antérieur et une formule G21 selon l'invention

Les deux formules testées sont les suivantes :
- La formule 31 décrite dans la demande internationale WO 2011/055072 (*formule non comprise* dans l'invention)
- La formule G21 selon la présente invention

| | **Formule 31** | **Formule G21** |
|---|---|---|
| **Ingrédients** | - 42,5% Huile de tournesol | - 69,91% Huile de tournesol |
| | - 42,5% Oléisol | - 20% Oléisol |
| | - 15%MGLAPF40 | - 10% MGLA PF10 |
| | - 0,05% Tocoblend | - 0,05% Tocoblend |
| | - 0,02% arome GH | - 0,03% arome GH |
| | - 0,8% poudre de babeurre | - 0,01% arome XF |
| **Aspect à température ambiante** | Opaque (couleur jaune crème), visqueux, similaire au produit Debic | Translucide, liquide, similaire à une huile |

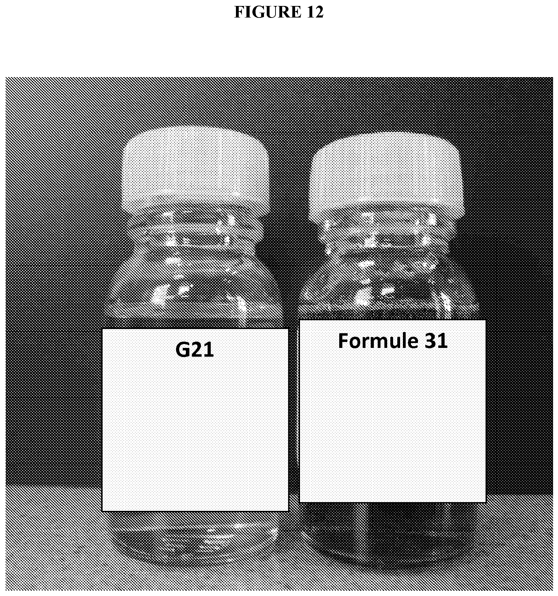

20g de la formule 31 et 20g de la formule G21 ont été chauffés à la poêle pendant 3min (température d'environ 200°C), sans aliment. Les résultats sont donnés dans la **figure 12****.** Un très net brunissement de la formule 31 est observé, avec présence de petites particules noires contrairement à G21 qui demeure translucide et sans particules.

## Revendications

1. Composition alimentaire liquide apte à être utilisée pour la cuisson des aliments, ladite composition contenant :
- 80% - 90% en poids de la composition d'un mélange d'huiles végétales comprenant 20% - 40% d'huile végétale oléique, notamment l'huile de tournesol oléique,
- 10% - 18% en poids de la composition de matière grasse laitière anhydre à l'état liquide ou à l'état solide, ladite matière grasse ayant un point de fusion compris de 5°C à 20°C,
- moins de 1% en poids de la composition d'antioxydant, lequel est dépourvu de propriétés émulsifiantes,
- optionnellement, au moins un additif, notamment un arôme beurre à raison de moins de 1% en poids de la composition,
ladite composition étant dépourvue d'eau, de sucres, de protéines et d'émulsifiant, et ladite composition ne noircissant pas à la cuisson, ayant des propriétés de stabilité physique de stockage à 40°C pendant au moins 30 jours, ayant des propriétés organoleptiques stables à la cuisson jusqu'à 200°C, et ayant une stabilité de stockage de 4°C à 25°C pendant au moins 10 mois.

2. Composition alimentaire liquide selon la revendication 1, ladite composition contenant :
- 80% - 90% en poids de la composition d'un mélange d'huiles végétales comprenant 20% - 40% d'huile végétale oléique, notamment l'huile de tournesol oléique,
- 10%-18% en poids de la composition de matière grasse laitière anhydre qui est un mélange d'au moins deux matières grasses laitières anhydres à points de fusion différents, et compris de 5°C à 20°C,
- moins de 1% en poids de la composition d'antioxydant, lequel est dépourvu de propriétés émulsifiantes,
- optionnellement, au moins un additif, notamment un arôme beurre à raison de moins de 1% en poids de la composition.

3. Composition alimentaire liquide selon l'une des revendications 1 à 2, dans laquelle la matière grasse laitière anhydre a un point de fusion compris de 8°C à 11°C, notamment 10.

4. Composition alimentaire liquide selon l'une des revendications 1 à 3, dans laquelle le mélange d'huiles végétales comprend 20% ou 25% d'huile végétale oléique.

5. Composition alimentaire liquide selon l'une des revendications 1 à 4, dans laquelle l'antioxydant est choisi parmi le groupe constitué par un mélange de tocophérols, un polyphénol ou un extrait de romarin.

6. Composition alimentaire liquide selon l'une des revendications 1 à 5, ladite composition contenant deux arômes beurre.

7. Composition alimentaire liquide selon l'une des revendications 1 à 6, dans laquelle l'huile végétale autre que l'huile végétale oléique, est choisie dans le groupe comprenant l'huile de tournesol, l'huile de soja, l'huile de maïs, l'huile de pépins de raisins, et les mélanges de ces huiles.

8. Composition alimentaire liquide selon l'une des revendications 1 à 7, ladite composition contenant :
- 80% - 90% en poids de la composition d'un mélange d'huiles végétales comprenant 20% ou 25% d'huile végétale oléique, notamment l'huile de tournesol oléique,
- 10% - 18% en poids de la composition de matière grasse laitière anhydre à l'état liquide ou à l'état solide, ladite matière grasse ayant un point de fusion compris de 5°C à 20°C, notamment de 10°C,
- moins de 1% en poids de la composition d'antioxydant, notamment un antioxydant naturel contenant les tocophérols suivants (sur une base de 100%) : D-α-Tocopherol : 9-20%, D-β-Tocopherol : 1-4%, D-γ-Tocopherol : 50-65%, D-δ-Tocopherol : 20-35%, lequel est dépourvu de propriétés émulsifiantes,
- deux arômes beurre à raison de moins de 1% en poids de la composition.

9. Composition alimentaire liquide selon l'une des revendications 1 à 7, ladite composition contenant
- 80% - 90% en poids de la composition d'un mélange d'huiles végétales comprenant 20% ou 25% d'huile végétale oléique, notamment l'huile de tournesol oléique,
- 10% - 18% en poids de la composition de matière grasse laitière anhydre à l'état liquide ou à l'état solide, ladite matière grasse ayant un point de fusion de 10°C,
- moins de 1% en poids de la composition d'antioxydant, notamment un antioxydant naturel contenant les tocophérols suivants (sur une base de 100%) : D-α-Tocopherol : 9-20%, D-β-Tocopherol : 1-4%, D-γ-Tocopherol : 50-65%, D-δ-Tocopherol : 20-35%, lequel est dépourvu de propriétés émulsifiantes,
- optionnellement, au moins un arôme beurre à raison de moins de 1% en poids de la composition.

10. Composition alimentaire liquide selon l'une des revendications 1 à 7, ladite composition contenant :
- 80% - 90% en poids de la composition d'un mélange d'huiles végétales comprenant 20% - 40% d'huile végétale oléique, notamment l'huile de tournesol oléique,
- 10% - 18% en poids de la composition de matière grasse laitière anhydre à l'état liquide ou à l'état solide, ladite matière grasse ayant un point de fusion de 10°C,
- moins de 1% en poids de la composition d'antioxydant, lequel est dépourvu de propriétés émulsifiantes,
- deux arômes beurre à raison de moins de 1% en poids de la composition.

11. Composition alimentaire liquide selon l'une des revendications 1 à 7, ladite composition contenant
- 80% - 90% en poids de la composition d'un mélange d'huiles végétales comprenant 20% - 40% d'huile végétale oléique, notamment l'huile de tournesol oléique,
- 10% - 18% en poids de la composition de matière grasse laitière anhydre à l'état liquide ou à l'état solide, ladite matière grasse ayant un point de fusion de 10°C,
- moins de 1% en poids d'un antioxydant naturel contenant les tocophérols suivants (sur une base de 100%) : D-α-Tocopherol : 9-20%, D-β-Tocopherol : 1-4%, D-γ-Tocopherol : 50-65%, D-δ-Tocopherol : 20-35%,
- optionnellement, au moins un arôme beurre à raison de moins de 1% en poids de la composition.

12. Composition alimentaire liquide selon l'une des revendications 1 à 11, ladite composition contenant
- 80% - 90% en poids de la composition d'un mélange d'huiles végétales comprenant 20% d'huile végétale oléique, notamment l'huile de tournesol oléique,
- 10% - 18% en poids de la composition de matière grasse laitière anhydre à l'état liquide ou à l'état solide, ladite matière grasse ayant un point de fusion de 10°C,
- moins de 1% en poids d'un antioxydant naturel contenant les tocophérols suivants (sur une base de 100%) : D-α-Tocopherol : 9-20%, D-β-Tocopherol : 1-4%, D-γ-Tocopherol : 50-65%, D-δ-Tocopherol : 20-35%,
- deux arômes beurre à raison de moins de 1% en poids de la composition.

13. Utilisation d'une composition selon l'une des revendications 1 à 12 comme huile de cuisson ou de friture plate.

## Patentansprüche

1. Flüssige Lebensmittelzusammensetzung, welche geeignet ist, zum Kochen von Lebensmitteln verwendet zu werden, wobei die Zusammensetzung enthält:
- 80 Gew.-% bis 90 Gew.-% einer Zusammensetzung einer Mischung von Pflanzenölen, umfassend 20 % bis 40 % Olein-Pflanzenöl, insbesondere Olein-Sonnenblumenöl,
- 10 Gew.-% bis 18 Gew.-% einer Zusammensetzung von wasserfreiem Milchfettstoff im flüssigen Zustand oder im festen Zustand, wobei der Fettstoff einen Schmelzpunkt von 5°C bis 20°C aufweist,
- weniger als 1 Gew.-% einer Antioxidans-Zusammensetzung, die keine emulgierenden Eigenschaften aufweist,
- gegebenenfalls mindestens ein Additiv, insbesondere ein Butteraroma in einer Menge von weniger als 1 Gew.-% der Zusammensetzung,
wobei die Zusammensetzung ohne Wasser, Zucker, Proteine und Emulgator ist, und wobei die Zusammensetzung beim Kochen nicht schwarz wird, physikalische Lagerstabilitätseigenschaften bei 40°C während mindestens 30 Tagen aufweist, bis 200°C kochstabile organoleptische Eigenschaften aufweist, und eine Lagerstabilität von 4°C bis 25°C während mindestens 10 Monaten aufweist.

2. Flüssige Lebensmittelzusammensetzung nach Anspruch 1, wobei die Zusammensetzung enthält:
- 80 Gew.-% bis 90 Gew.-% einer Zusammensetzung einer Mischung von Pflanzenölen, umfassend 20 % bis 40 % Olein-Pflanzenöl, insbesondere Olein-Sonnenblumenöl,
- 10 Gew.-% bis 18 Gew.-% einer Zusammensetzung von wasserfreiem Milchfettstoff, der eine Mischung von mindestens zwei wasserfreien Milchfettstoffen mit verschiedenen Schmelzpunkten und von 5°C bis 20°C ist,
- weniger als 1 Gew.-% einer Antioxidans-Zusammensetzung, die keine emulgierenden Eigenschaften aufweist,
- gegebenenfalls mindestens ein Additiv, insbesondere ein Butteraroma in einer Menge von weniger als 1 Gew.-% der Zusammensetzung.

3. Flüssige Lebensmittelzusammensetzung nach einem der Ansprüche 1 bis 2, wobei der wasserfreie Milchfettstoff einen Schmelzpunkt von 8°C bis 11°C, insbesondere 10, aufweist.

4. Flüssige Lebensmittelzusammensetzung nach einem der Ansprüche 1 bis 3, wobei die Mischung von Pflanzenölen 20 % bis 25 % Olein-Pflanzenöl aufweist.

5. Flüssige Lebensmittelzusammensetzung nach einem der Ansprüche 1 bis 4, wobei das Antioxidans ausgewählt ist aus der Gruppe bestehend aus einer Mischung von Tocopherolen, einem Polyphenol oder einem Rosmarin-Extrakt.

6. Flüssige Lebensmittelzusammensetzung nach einem der Ansprüche 1 bis 5, wobei die Zusammensetzung zwei Butteraromen enthält.

7. Flüssige Lebensmittelzusammensetzung nach einem der Ansprüche 1 bis 6, wobei das andere Pflanzenöl als Olein-Pflanzenöl ausgewählt ist aus der Gruppe umfassend ein Sonnenblumenöl, ein Sojaöl, ein Maisöl, ein Traubenkernöl und Mischungen dieser Öle.

8. Flüssige Lebensmittelzusammensetzung nach einem der Ansprüche 1 bis 7, wobei die Zusammensetzung enthält:
- 80 Gew.-% bis 90 Gew.-% einer Zusammensetzung einer Mischung von Pflanzenölen, umfassend 20 % oder 25 % Olein-Pflanzenöl, insbesondere Olein-Sonnenblumenöl,
- 10 Gew.-% bis 18 Gew.-% einer Zusammensetzung von wasserfreiem Milchfettstoff im flüssigen Zustand oder im festen Zustand, wobei der Fettstoff einen Schmelzpunkt von 5°C bis 20°C, insbesondere von 10°C, aufweist,
- weniger als 1 Gew.-% einer Antioxidans-Zusammensetzung, insbesondere eines natürlichen Antioxidans, das die folgenden Tocopherole (bezogen auf eine Basis von 100 %) enthält: D-α-Tocopherol: 9 bis 20 %, D-β-Tocopherol: 1 bis 4 %, D-γ-Tocopherol: 50 bis 65 %, D-δ-Tocopherol: 20 bis 35 %, die keine emulgierenden Eigenschaften aufweist,
- zwei Butteraromen in einer Menge von weniger als 1 Gew.-% der Zusammensetzung.

9. Flüssige Lebensmittelzusammensetzung nach einem der Ansprüche 1 bis 7, wobei die Zusammensetzung enthält:
- 80 Gew.-% bis 90 Gew.-% einer Zusammensetzung einer Mischung von Pflanzenölen, umfassend 20 % oder 25 % Olein-Pflanzenöl, insbesondere Olein-Sonnenblumenöl,
- 10 Gew.-% bis 18 Gew.-% einer Zusammensetzung von wasserfreiem Milchfettstoff im flüssigen Zustand oder im festen Zustand, wobei der Fettstoff einen Schmelzpunkt von 10°C aufweist,
- weniger als 1 Gew.-% einer Antioxidans-Zusammensetzung, insbesondere eines natürlichen Antioxidans, das die folgenden Tocopherole (bezogen auf eine Basis von 100 %) enthält: D-α-Tocopherol: 9 bis 20 %, D-β-Tocopherol: 1 bis 4 %, D-γ-Tocopherol: 50 bis 65 %, D-δ-Tocopherol: 20 bis 35 %, die keine emulgierenden Eigenschaften aufweist,
- gegebenenfalls mindestens ein Butteraroma in einer Menge von weniger als 1 Gew.-% der Zusammensetzung.

10. Flüssige Lebensmittelzusammensetzung nach einem der Ansprüche 1 bis 7, wobei die Zusammensetzung enthält:
- 80 Gew.-% bis 90 Gew.-% einer Zusammensetzung einer Mischung von Pflanzenölen, umfassend 20 % bis 40 % Olein-Pflanzenöl, insbesondere Olein-Sonnenblumenöl,
- 10 Gew.-% bis 18 Gew.-% einer Zusammensetzung von wasserfreiem Milchfettstoff im flüssigen Zustand oder im festen Zustand, wobei der Fettstoff einen Schmelzpunkt von 10°C, aufweist,
- weniger als 1 Gew.-% einer Antioxidans-Zusammensetzung, die keine emulgierenden Eigenschaften aufweist,
- zwei Butteraromen in einer Menge von weniger als 1 Gew.-% der Zusammensetzung.

11. Flüssige Lebensmittelzusammensetzung nach einem der Ansprüche 1 bis 7, wobei die Zusammensetzung enthält:
- 80 Gew.-% bis 90 Gew.-% einer Zusammensetzung einer Mischung von Pflanzenölen, umfassend 20 % bis 40 % Olein-Pflanzenöl, insbesondere Olein-Sonnenblumenöl,
- 10 Gew.-% bis 18 Gew.-% einer Zusammensetzung von wasserfreiem Milchfettstoff im flüssigen Zustand oder im festen Zustand, wobei der Fettstoff einen Schmelzpunkt von 10°C aufweist,
- weniger als 1 Gew.-% eines natürlichen Antioxidans, das die folgenden Tocopherole (bezogen auf eine Basis von 100 %) enthält: D-α-Tocopherol: 9 bis 20 %, D-β-Tocopherol: 1 bis 4 %, D-γ-Tocopherol: 50 bis 65 %, D-δ-Tocopherol: 20 bis 35 %,
- gegebenenfalls mindestens ein Butteraroma in einer Menge von weniger als 1 Gew.-% der Zusammensetzung

12. Flüssige Lebensmittelzusammensetzung nach einem der Ansprüche 1 bis 11, wobei die Zusammensetzung enthält:
- 80 Gew.-% bis 90 Gew.-% einer Zusammensetzung einer Mischung von Pflanzenölen, umfassend 20 % Olein-Pflanzenöl, insbesondere Olein-Sonnenblumenöl,
- 10 Gew.-% bis 18 Gew.-% einer Zusammensetzung von wasserfreiem Milchfettstoff im flüssigen Zustand oder im festen Zustand, wobei der Fettstoff einen Schmelzpunkt von 10°C, aufweist,
- weniger als 1 Gew.-% eines natürlichen Antioxidans, das die folgenden Tocopherole (bezogen auf eine Basis von 100 %) enthält: D-α-Tocopherol: 9 bis 20 %, D-β-Tocopherol: 1 bis 4 %, D-γ-Tocopherol: 50 bis 65 %, D-δ-Tocopherol: 20 bis 35 %,
- zwei Butteraromen in einer Menge von weniger als 1 Gew.-% der Zusammensetzung.

13. Verwendung einer Zusammensetzung nach einem der Ansprüche 1 bis 12 als Öl zum Kochen oder Flachbraten.

## Claims

1. Liquid food composition able to be used for food cooking, said composition containing:
- 80%-90% by weight of the composition of a mixture of vegetable oils comprising 20%-40% of oleic vegetable oil, in particular oleic sunflower oil,
- 10%-18% by weight of the composition of anhydrous milk fat on a liquid or solid state, said fat having a melting point from 5°C to 20°C,
- less than 1% by weight of the composition of antioxidant, said antioxidant having no emulsifying properties,
- optionally, at least one additive, in particular a butter flavor at less than 1% by weight of the composition,
said composition having no water, sugars, proteins and emulsifier, and
said composition showing no blackening during cooking, having physical stability properties for a storage at 40°C during at least 30 days, having stable organoleptic properties during cooking at a temperature up to 200°C, and having a storage stability from 4°C to 25°C during at least 10 months.

2. Liquid food composition according to claim 1, said composition containing:
- 80%-90% by weight of the composition of a mixture of vegetable oils comprising 20%-40% of oleic vegetable oil, in particular oleic sunflower oil,
- 10%-18% by weight of the composition of anhydrous milk fat being a mixture of at least two anhydrous milk fats having different melting points, and comprised from 5°C to 20°C,
- less than 1% by weight of the composition of antioxidant, said antioxidant having no emulsifying properties,
- optionally, at least one additive, in particular a butter flavor at less than 1% by weight of the composition.

3. Liquid food composition according to anyone of claims 1 to 2, in which the anhydrous milk fat has a melting point from 8°C to 11°C, in particular 10°C.

4. Liquid food composition according to anyone of claims 1 to 3, in which the mixture of vegetable oils comprises 20% or 25% of oleic vegetable oil.

5. Liquid food composition according to anyone of claims 1 to 4, in which the antioxidant is chosen in the group consisting of a mixture of tocopherols, a polyphenol or a rosemary extract.

6. Liquid food composition according to anyone of claims 1 to 5, said composition containing two butter flavors.

7. Liquid food composition according to anyone of claims 1 to 6, in which the vegetable oil other than the oleic vegetable oil, is chosen in the group consisting of sunflower oil, soybean oil, corn oil, grape seed oil, and mixtures of these oils.

8. Liquid food composition according to anyone of claims 1 to 7, said composition containing:
- 80%-90% by weight of the composition of a mixture of vegetable oils comprising 20% or 25% of oleic vegetable oil, in particular oleic sunflower oil,
- 10%-18% by weight of the composition of anhydrous milk fat on a liquid or solid state, said fat having a melting point from 5°C to 20°C, in particular 10°C,
- less than 1% by weight of the composition of antioxidant, in particular a natural antioxidant containing the following tocopherols (on a basis of 100%) : D-α-Tocopherol : 9-20%, D-β-Tocopherol : 1-4%, D-γ-Tocopherol : 50-65%, D-δ-Tocopherol: 20-35%, said antioxidant having no emulsifying properties,
- two butter flavors at less than 1% by weight of the composition.

9. Liquid food composition according to anyone of claims 1 to 7, said composition containing:
- 80%-90% by weight of the composition of a mixture of vegetable oils comprising 20% or 25% of oleic vegetable oil, in particular oleic sunflower oil,
- 10%-18% by weight of the composition of anhydrous milk fat on a liquid or solid state, said fat having a melting point of 10°C,
- less than 1% by weight of the composition of antioxidant, in particular a natural antioxidant containing the following tocopherols (on a basis of 100%) : D-α-Tocopherol : 9-20%, D-β-Tocopherol : 1-4%, D-γ-Tocopherol : 50-65%, D-δ-Tocopherol: 20-35%, said antioxidant having no emulsifying properties,
- optionally, at least one butter flavor at less than 1% by weight of the composition.

10. Liquid food composition according to anyone of claims 1 to 7, said composition containing:
- 80%-90% by weight of the composition of a mixture of vegetable oils comprising 20%-40% of oleic vegetable oil, in particular oleic sunflower oil,
- 10%-18% by weight of the composition of anhydrous milk fat on a liquid or solid state, said fat having a melting point of 10°C,
- less than 1% by weight of the composition of antioxidant, said antioxidant having no emulsifying properties,
- two butter flavors at less than 1% by weight of the composition.

11. Liquid food composition according to anyone of claims 1 to 7, said composition containing:
- 80%-90% by weight of the composition of a mixture of vegetable oils comprising 20%-40% of oleic vegetable oil, in particular oleic sunflower oil,
- 10%-18% by weight of the composition of anhydrous milk fat on a liquid or solid state, said fat having a melting point of 10°C,
- less than 1% by weight of a natural antioxidant containing the following tocopherols (on a basis of 100%) : D-α-Tocopherol : 9-20%, D-β-Tocopherol : 1-4%, D-γ-Tocopherol : 50-65%, D-δ-Tocopherol : 20-35%,
- optionally, at least one butter flavor at less than 1% by weight of the composition.

12. Liquid food composition according to anyone of claims 1 to 11, said composition containing:
- 80%-90% by weight of the composition of a mixture of vegetable oils comprising 20% of oleic vegetable oil, in particular oleic sunflower oil,
- 10%-18% by weight of the composition of anhydrous milk fat on a liquid or solid state, said fat having a melting point of 10°C,
- less than 1% by weight of a natural antioxidant containing the following tocopherols (on a basis of 100%) : D-α-Tocopherol : 9-20%, D-β-Tocopherol : 1-4%, D-γ-Tocopherol : 50-65%, D-δ-Tocopherol : 20-35%,
- two butter flavors at less than 1% by weight of the composition.

13. Use of a composition according to anyone of claims 1 to 12 as a cooking or pan frying oil.
